# Europäisches Patentamt
# European Patent Office
# Office européen des brevets

(11) Publication number: **0 154 382**
**B1**

(12) **EUROPEAN PATENT SPECIFICATION**

(45) Date of publication of patent specification: **14.06.89**

(51) Int. Cl.⁴: **B 29 D 11/00** // B29L11:00

(21) Application number: **85200311.0**

(22) Date of filing: **04.03.85**

(54) **Method of producing a lens element having an accurately centred aspherical surface formed by replication, and apparatus for carrying out the method.**

(30) Priority: **09.03.84 GB 8406159**

(43) Date of publication of application:
**11.09.85 Bulletin 85/37**

(45) Publication of the grant of the patent:
**14.06.89 Bulletin 89/24**

(84) Designated Contracting States:
**CH DE FR GB LI NL**

(56) References cited:
**EP-A-0 051 027
DE-A-2 255 923
US-A-2 532 501
US-A-3 273 204**

(73) Proprietor: **PHILIPS ELECTRONIC AND
ASSOCIATED INDUSTRIES LIMITED
Philips House 188 Tottenham Court Road
London W1P 9LE (GB)**
(84) **GB**

(73) Proprietor: **N.V. Philips' Gloeilampenfabrieken
Groenewoudseweg 1
NL-5621 BA Eindhoven (NL)**
(84) **CH DE**

(72) Inventor: **Howden, Harry c/o PHILIPS
RESEARCH LABORATORIES
Redhill
Surrey RH1 5HA (GB)**

(74) Representative: **Boxall, Robin John et al
PHILIPS ELECTRONICS Patents and Trade Marks
Department Centre Point New Oxford Street
London WC1A 1QJ (GB)**

Courier Press, Leamington Spa, England.

## Description

The invention relates to a method of producing a lens element having on one side a replicated aspherical surface which is centred, i.e., axially aligned, with respect to a non-aspherical surface on the reverse side of the element, each surface being a surface of revolution. The non-aspherical surface may be spherical or flat. Such methods are known in the art.

Until recently the forming of aspherical surfaces on optical elements by replication has been limited to elements which require only a fairly low order of accuracy in the centring of the aspherical surface, for example, Schmidt corrector plates. The use of replication techniques is now being extended to more critical optical elements, such as lens elements for projection T.V. systems, which demand a much greater centring accuracy, and it is a object of the present invention to satisfy this demand.

According to the invention there is provided a method of producing a lens element having on one side a replicated aspherical surface which is axially aligned with a non-aspherical surface on the reverse side of the element, each surface being a surface of revolution, the method being characterised by the steps of preforming a glass lens substrate having on one side an aspherical surface of approximately the desired profile and finish of the required aspherical surface on the finished lens element and on the reverse side a non-aspherical surface, forming on a mould tool a moulding surface having 'an accurate negative profile of the required aspherical surface on the finished lens element and having the desired optical finish of this surface, mounting the mould tool on a rotatable jig and, by rotating the mould tool by means of the jig to detect misalignment of tbe axis of the moulding surface and the axis of rotation of the jig and adjusting the mould tool on the jig to correct such misalignment, positioning the mould tool on the jig with the axis of the moulding surface accurately aligned with the rotational axis of the jig, securing the mould tool in this position on the jig, mounting the preformed lens substrate on the jig with the aspherical surface of the substrate facing and spaced from the moulding surface of the mould tool and, by rotating the substrate by means of the jig to detect misalignment of the axis of the non-aspherical surface of the substrate and the rotational axis of the jig and adjusting the substrate on the jig to correct such misalignment, positioning the substrate on the jig with the axis of the non-aspherical surface of the substrate accurately aligned with the rotational axis of the jig and with a distance between said non-aspherical surface and the moulding surface, measured along the aligned axes of these surfaces, which is equal to the desired axial thickness of the finished lens element, filling the space between the aspherical surface of the substrate and the moulding surface with a liquid light-transmissive polymeric material, bonding this material to the aspherical surface of the substrate while moulding the material to form the required aspherical surface, and subsequently separating the substrate, with the moulded layer of polymeric material bonded thereto from the moulding surface.

The adjustment of the mould tool and the adjustment of the lens substrate may each comprise translational adjustment in a direction or directions transverse to the axis of rotation of the jig and/or rotational adjustment about an axis or axes perpendicular to the axis of rotation of the jig, and the adjustment of the substrate may also comprise adjustment axially of the jig relative to the mould tool.

Prior to separation of the substrate from the mould tool the edge of the substrate may be ground to give the finished lens element an edge which is concentric with the aligned axes of the aspherical and non-aspherical surfaces of the lens element. This ensures that the element as a whole will be accurately centred with respect to the mounting in which it is subsequently fitted.

The invention also provides an apparatus for carrying out the method according to the invention, the apparatus being characterized by a rotatable jig for supporting the mould tool and the preformed lens substrate, means which are operable upon rotation of the mould tool and rotation of the substrate by means of the jig to detect misalignment of the axis of the moulding surface of the mould tool and the axis of rotation of the jig and misalignment of the axis of the non-aspherical surface of the substrate and the axis of rotation of the jig, means for adjusting the mould tool on the jig to correct misalignment of the axis of the moulding surface and the rotational axis of the jig and for securing the mould tool in a position on the jig in which these two axes are accurately aligned with each other, and means for adjusting the substrate on the jig to correct misalignment of the axis of the non-aspherical surface of the substrate and the rotational axis of the jig and position the substrate on the jig with these two axes accurately aligned with each other, and for adjusting the substrate axially of the jig relatively to the mould tool to set the distance between said non-aspherical surface and the moulding surface, measured along the aligned axes of these surfaces, to a desired value.

The means for adjusting the mould tool and the means for adjusting the substrate may comprise screwthreaded adjusting devices on the jig which are arranged for adjusting the mould tool and the substrate translationally in directions transverse to the axis of rotation of the jig and rotationally about axes perpendicular to the axis of rotation of the jig, and for adjusting the substrate axially of the jig relatively to the mould tool.

An example of the method according to the invention and an embodiment of the apparatus for carrying out the method will now be described with reference to the accompanying drawings, in which

Figure 1 is an axial sectional view of the jig with a mould tool mounted on it, illustrating diagrammatically the detection of axial misalignment of the mould tool and the jig,

Figure 2 is a view similar to Figure 1 showing a preformed lens substrate mounted on the jig above the mould tool and illustrates the detection of axial misalignment of the substrate and the jig.

Figure 3 is another axial sectional view showing the gap between the substrate and the mould tool filled with polymeric material, and Figure 4 is an axial sectional view of the finished lens element after separation from the mould tool.

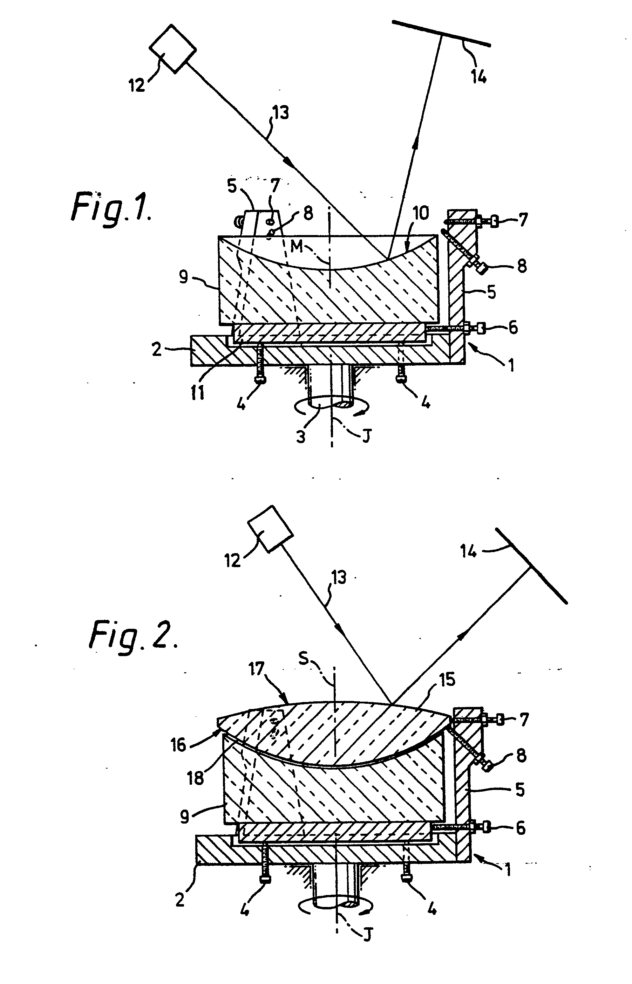

The jig 1 shown in Figures 1, 2, and 3 is supported for rotation about a vertical axis J and comprises a generally circular horizontal base-plate 2 fixed on a vertical shaft 3 which is arranged to be driven by an electric motor (not shown). Extending parallel to the axis J through screwthreaded bores in the base-plate 1 are three or more adjustment screws 4 which are equally spaced about the axis of the shaft 3, which is the axis of rotation of the jig in the present embodiment there are three of these adjustment screws in the base-plate.

Projecting upwardly from the base-plate at the periphery thereof are three posts 5 which are equally spaced around the periphery of the base-plate. There may be more than three of these posts if desired. In the lower part of each post is an adjustment screw 6 which extends radially with respect to the axis of rotation J of the jig through a screwthreaded bore in the post. In the upper part of each post are an adjustment screw 7 which also extends radially with respect to the axis of rotation J of the jig through a screwthreaded bore in the post, and below the screw 7 an adjustment screw 8 which extends through a bore which is inclined upwardly from the outer side of the post to the inner side.

Figure 1 shows a mould tool 9 mounted on the jig 1. The mould tool consists of a glass block of cylindrical form provided on one side with a moulding surface 10 having an accurate negative or reverse profile of the required aspherical surface on the lens element to be produced, which surface is a surface of revolution. In the present example this aspherical surface is a convex surface and the moulding surface 10 therefore a concave surface. The moulding surface 10 is formed by hand figuring and polishing to the desired profile accuracy and optical finish of the required aspherical surface on the lens element. On the side remote from the moulding surface 10 the mould tool 9 is flat, and to mount the mould tool on the jig 1 the tool is secured at this side, for example, by waxing, to a circular steel plate 11 which is then placed on the tips of the adjustment screws 4 in the base-plate 2 of the jig so as to be level with the radial adjustment screws 6 in the lower parts of the posts 5 of the jig. The mould tool is roughly centred by eye on the jig and the adjustment screws 6 are turned to bring their inner ends into engagement with the edge of the plate 11.

The mould tool 9 now has to be accurately centred on the jig 1, that is to say, the axis M of the moulding surface 10, i.e., the axis about which this surface of revolution is generated, has to be accurately aligned with the axis of rotation J of the jig. This done with the aid of means for detecting misalignment of the two axes. These means may be of a known kind used in centring a lens element having a spherical surface on both sides. In the present embodiment the means comprise a light source 12 which directs a collimated light beam 13 onto the moulding surface 10 at a point spaced from the axis M of this suurface. The beam is reflected by the moulding surface onto a screen 14. The mould tool 9 is rotated by means of the jig and if, as is likely, there is misalignment of the axis M of the moulding surface 10 and the rotational axis J of the jig, the spot of reflected light on the screen 14 will move as the mould tool rotates. The mould tool is then adjusted as necessary on the jig by means of the adjustment screws 4 and/or the adjustment screws 6 until the light spot remains motionless on the screen, which indicates that the two axis M and J are accurately aligned with each other. The mould tool is adjustable rotationally about axes perpendicular to the axis J of the jig by means of the vertical adjustment screws 4 and translationally in directions perpendicular to the axis J by means of the radial adjustment screws 6. When the adjustment has been completed the screws 6 are tightened to clamp the mould tool in the centred position on the jig 1.

Figure 2 shows a preformed glass lens substrate 15 mounted on the jig 1 above the mould tool 9. The substrate is produced in known manner. On one side it has an aspherical surface 16 of approximately the desired profile and finish of the required aspherical surface on the lens element to be produced. The surface 16 is formed in known manner by a conventional cheap production technique, for example, moulding, machining and/or grinding. On the reverse side the substrate 15 is provided with a spherical surface 17, which is also formed in known manner by conventional grinding and polishing techniques. The surface 17 is a surface of revolution generated about an axis S.

The substrate 15 is given a diameter slightly larger than that of the mould tool 9 so that when the substrate is placed on the jig 1 above the mould tool a peripheral portion of the substrate projects beyond the periphery of the mould tool to rest on the tips of the upwardly inclined adjustment screws 8 on the jig, as shown in Figure 2. The substrate is initially mounted in a roughly centred position on the screws 8, with its aspherical surface 16 facing the moulding surface 10 of the mould tool and spaced from this surface by a gap 18, and the upper radial adjustment screws 7 in the posts 5 of the jig 1 are turned to bring their inner ends into engagement with the edge of the substrate. The substrate is then centred accurately on the jig 1 in a similar manner to that in which the mould tool 9 was centred. Thus, by directing the beam 13 from the light source 12 onto the spherical surface 17 of the substrate for reflection onto the screen 14 while the substrate is rotated hy means of the jig, misalignment of the axis S of the surface 17 and the axis of rotation J of the jig can be detected, and by means of the adjustment screws 7 and 8 the misalignment can be corrected. The substrate is adjustable translationally in directions transverse to the axis J of the jig by means of the radial adjustment screws 7 and rotationally about axes perpendicular to the axis J by means of the inclined adjustment screws 8. When the axis S of the spherical surface 17 of the substrate is accurately aligned with the axis J of the jig it is ipso facto accurately aligned with the axis M of the moulding surface 10 of the mould tool 9.

The substrate is also adjustable axially of the jig 1 relative to the mould tool 9 by means of the inclined adjustment screws 8 to set the distance between the spherical surface 17 of the substrate and the moulding surface 10 of the mould tool, measured along the aligned axis of these surfaces, to the desired axial thickness of the finished lens element. When the adjustments of the substrate have been completed, the radial adjustment screws 7 are tightened to clamp the substrate in position on the jig 1.

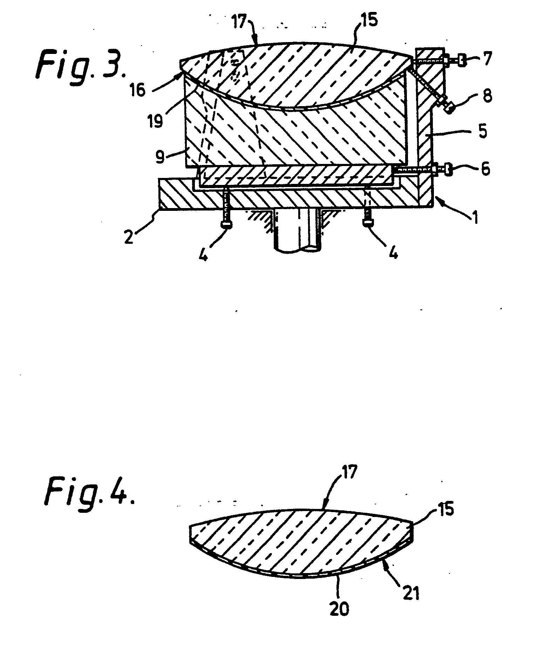

The actual process of replicating the required aspherical surface can now be carried out. This is a known process and need not be described in detail. It consists of filling the gap 18 between the aspherical surface 16 of the substrate 15 and the moulding surface 10 of the mould tool 9 with a suitable light-transmissive polymeric material in liquid form, as shown at 19 in Figure 3, and allowing the material to harden to form a moulded layer which on one side is bonded to the relatively inaccurate aspherical surface of the substrate and on the other side presents an aspherical surface of the desired profile accuracy and optical finish, reproduced from the moulding surface of the mould tool. If desired, before mounting the substrate on the jig the aspherical surface 16 of the substrate may be treated with a bond-promoting agent.

The substrate, with the moulded layer bonded to it, is subsequently separated from the mould tool 9 but before this the edge of the substrate is ground down to the required diameter of the 1 finished lens element. This also gives the lens element an edge which is truly concentric with the aligned axes of the spherical and aspherical surfaces of the lens element so that the element as a whole will be accurately centred with respect to the mounting in which it is subsequently fitted. The finished lens element is shown in Figure 4, in which the moulded layer is designated 20 and the aspherical surface presented by the layer is designated 21. The separation of the moulded layer from the moulding surface 10 of the mould tool 9 may be assisted by treating the latter surface with a release agent prior to mounting the mould tool on the jig 1. The same mould tool may, of course, be used repeatedly to produce a large number of the lens elements.

In the above example the method according to the invention is used to produce a lens element having a convex aspherical surface. The method may also be used to produce a lens element having a concave aspherical surface.

Instead of a collimated light beam a laser beam may be used in the means described for detecting misalignment of the axes of the moulding surface of the mould tool and the aspherical surface of the substrate and the axis of rotation of the jig. Other known means may be used for this purpose; for example, an electrically sensitive stylus or a stylus coupled to a mechanical clock gauge.

**Claims**

1. A method of producing a lens element having on one side a replicated aspherical surface which is axially aligned with a non-aspherical surface on the reverse side of the element, each surface being a surface of revolution, the method being characterised by the steps of preforming a glass lens substrate having on one side an aspherical surface of approximately the desired profile and finish of the required aspherical surface on the finished lens element and on the reverse side a non-aspherical surface, forming on a mould tool a moulding surface having an accurate negative profile of the required aspherical surface on the finished lens element and having the desired optical finish of this surface, mounting the mould tool on a rotatable jig and, by rotating the mould tool by means of the jig to detect misalignment of the axis of the moulding surface and the axis of rotation of the jig and adjusting the mould tool on the jig to correct such misalignment, positioning the mould tool on the jig with the axis of the moulding surface accurately aligned with the rotational axis of the jig, securing the mould tool in this position on the jig, mounting the preformed lens substrate on the jig with the aspherical surface of the substrate facing and spaced from the moulding surface of the mould tool and, by rotating the substrate by means of the jig to detect misalignment of the axis of the non-aspherical surface of the substrate and the rotational axis of the jig and adjusting the substrate on the jig to correct such misalignment, positioning the substrate on the jig with the axis of the non-aspherical surface of the substrate accurately aligned with the rotational axis of the jig and with a distance between said non-aspherical surface and the moulding surface, measured along the aligned axes of these surfaces, which is equal to the desired axial thickness of the finished lens element, filling the space between the aspherical surface of the substrate and the moulding surface with a liquid light-transmissive polymeric material, bonding this material to the aspherical surface of the substrate while moulding the material to form the required aspherical surface, and subsequently separating the substrate, with the moulded layer of polymeric material bonded thereto, from the moulding surface.

2. A method as claimed in Claim 1, characterized in that the adjustment of the mould tool and the adjustment of the lens substrate each comprise translational adjustment in a direction or directions transverse to the axis of rotation of the jig and/or rotational adjustment about an axis or axes perpendicular to the axis of rotation of the jig, and the adjustment of the substrate also comprises adjustment axially of the jig relative to the mould tool.

3. A method as claimed in Claim 1 or 2, characterized in that prior to separation of the substrate from the mould tool the edge of the substrate is ground to give the finished lens element an edge which is concentric with the aligned axes of the aspherical and non-aspherical surfaces of the lens element.

4. An apparatus for carrying out the method claimed in Claim 1, the apparatus being characterized by a rotatable jig for supporting the mould tool and preformed lens substrate, means which are operable upon rotation of the mould tool and rotation of the substrate by means of the jig to detect misalignment of the axis of the moulding surface of the mould tool and the axis of rotation of the jig and misalignment of the axis of the non-aspherical surface of the substrate and the axis of rotation of the jig, means for adjusting the mould tool on the jig to correct misalignment of the axis of the moulding surface and the rotational axis of the jig and for securing the mould tool in a position on the jig in which these two axes are accurately aligned with each other, and means for adjusting the substrate on the jig to correct misalignment of the axis of the non-aspherical surface of the substrate and the rotational axis of the jig and position the substrate on the jig with these two axes accurately aligned with each other, and for adjusting the substrate axially of the jig relatively to the mould tool to set the distance between said non-aspherical surface and the moulding surface, measured along the aligned axes of these surfaces to a desired value.

5. An apparatus as claimed in Claim 4 for carrying out the method claimed in Claim 2, characterized in that the means for adjusting the mould tool and the means for adjusting the substrate comprise screwthreaded adjusting devices on the jig which are arranged for adjusting the mould tool and the substrate translationally in directions transverse to the axis of rotation of the jig and rotationally about axes perpendicular to the axis of rotation of the jig, and for adjusting the substrate axially of the jig relatively to the mould tool.

**Patentansprüche**

1. Verfahren zum Herstellen eines Linsenelementes mit auf der einen Seite einer abgeformten asphärischen Oberfläche, die gegenüber einer nicht-asphärischen Oberfläche auf der gegenüberliegenden Seite des Elementes axial ausgerichtet ist, wobei jede Oberfläche eine Umdrehungsfläche ist, wobei dieses Verfahren durch die folgenden Verfahrensschritte gekennzeichnet ist, und zwar das Herstellen eines Glaslinsenträgers mit auf einer Seite einer asphärischen Oberfläche mit dem annähernd gewünschten Profil und der Abarbeitung der erforderlichen asphärischen Oberfläche auf dem fertigen Linsenelement und mit auf der gegenüberliegenden Seite einer nicht-asphärischen Oberfläche, das in einem Formwerkzeug Bilden einer Formoberfläche mit einem genauen negativen Profil der erforderlichen asphärischen Oberfläche auf dem fertigen Linsenelement und mit der gewünschten optischen Fertigbearbeitung dieser Oberfläche, das Anordnen des Formwerkzeugs auf einer drehbaren Einspannvorrichtung und unter Drehung des Formwerkzeugs mittels der Einspannvorrichtung zum Detektieren von Aussermittigkeit der Achse der Formfläche und der Drehachse der Einspannvorrichtung und unter Einstellung des Formwerkzeugs auf der Einspannvorrichtung zum Korrigieren dieser Aussermittigkeit, das Ausrichten des Formwerkzeugs auf der Einspannvorrichtung, wobei die Achse der Formoberfläche gegenüber der Drehachse der Einspannvorrichtung genau ausgerichtet ist, das Befestigen des Formwerkzeugs in dieser Lage auf der Einspannvorrichtung, das Anordnen des vorgeformten Linsenträgers auf der Einspannvorrichtung, wobei die asphärische Oberfläche des Trägers der Formoberfläche des Formwerkzeugs zugewandt ist und in einem Abstand von derselben liegt und unter Drehung des Trägers mittels der Einspannvorrichtung zum Detektieren von Aussermittigkeit der Achse der nicht-asphärischen Oberfläche des trägers und der Drehachse der Einspannvorrichtung und unter Einstellung des Trägers auf der Einspannvorrichtung zum Korrigieren dieser Aussermittigkeit, das Ausrichten des Trägers auf der Einspannvorrichtung, wobei die Achse der nicht-asphärischen Oberfläche des Trägers gegenüber der Drehachse der Einspannvorrichtung genau ausgerichtet ist und wobei es zwischen der genannten nicht-asphärischen Oberfläche und der Formoberfläche einen Abstand gibt, der, gemessen über die ausgerichteten Achsen dieser Oberflächen, der gewünschten axialen Dicke des fertigen Linsenelementes entspricht, das Füllen des Raumes zwischen der asphärischen Oberfläche des Trägers und der Formoberfläche mit einem flüssigen lichtübertragenden polymeren Material, wobei dieses Material mit der asphärischen Oberfläche des Trägers verbunden wird, wobei das Material zum Formen der gewünschten asphärischen Oberfläche Formgepresst wird, wonach der Träger mit der daran befestigten formgepressten Schicht aus polymerem Material von der Formoberfläche entfernt wird.

2. Verfahren nach Anspruch 1, dadurch gekennzeichnet, dass die Einstellung des Formwerkzeugs und die Einstellung des Linsenträgers je eine geradlinige Einstellung in einer Richtung oder in Richtungen quer zu der Drehachse der Einspannvorrichtung und/oder eine Dreheinstellung um eine Achse oder um Achsen senkrecht zu der Drehachse der Einspannvorriohtung umfasst und dass die Einstellung des trägers ebenfall eine axiale Einstellkung der Einspannvorrichtung gegenüber dem Formwerkzeug umfasst.

3. Verfahren nach Anspruch 1 oder 2, dadurch gekennzeichnet, dass vor der Entfernung des Trägers aus dem Formwerkzeug ddr Rand des Trägers geschliffen wird, damit das fertige Linsenelement einen Rand erhält, der zu den ausgerichteten Achsen der asphärischen sowie nichtasphärischen Oberfläche des Linsenelementes konzentrisch ist.

4. Gerät zum Durchführen des Verfahrens nach Anspruch 1, wobei dieses Gerät gekennzeichnet ist durch eine drehbare Einspannvorrichtung zum Unterstützen des Formwerkzeugs und des vorgeformten Linsenträgers, durch Mittel, die bei Drehung des Formwerkzeugs und Drehung des Trägers mittels der Einspannvorrichtung zum Detektieren von Aussermittigkeit der Achse der Formoberfläche des Formwerkzeugs und der Drehachse der Einspannvorrichtung und von Aussermittigkeit der Achse der nicht-asphärischen Oberfläche des Trägers und der Drehachse der Einspannvorrichtung, durch Mittel zum Einstellen des Formwerkzeugs auf der Einspannvorrichtung zum Korrigieren der Aussermittigkeit der Achse der Formoberfläche und der Drehachse der Einspannvorrichtung und zum Befestigen des Formwerkzeugs in einer Lage auf der Einspannvorrichtung, in der diese zwei Achsen gegenüber einander genau ausgerichtet sind und durch Mittel zum Einstellen des Trägers auf der Einspannvorrichtung zum Korrigieren der Aussermittigkeit der Achse der nicht-asphärischen Oberfläche des trägers und der Drehachse der Einspannvorrichtung und zum Ausrichten des Trägers auf der Einspannvorrichtung, wobei diese zwei Achsen zueinander genau ausgerichtet sind und zum axialen Einstellen des Trägers gegenüber dem Formwerkzeug zum Einstellen des Abstandes zwischen der genannten nicht-asphärischen Oberfläche der Formoberfläche, gemessen längs der ausgerichteten Achsen dieser Oberflächen auf einen gewünschten Wert.

5. Gerät nach Anspruch 4 zum Durchführen des Verfahrens nach Anspruch 2, dadurch gekennzeichnet, dass die Mittel zum Einstellen des Formwerkzeugs und die Mittel zum Einstellen des trägers mit Gewinde versehene Einstell-vorrichtungen auf der Einspannvorrichtung aufweisen, die zum geradlinigen Einstellen des Formwerkzeugs sowie des Trägers in Richtungen quer zu der Drehachse der Einspannvorrichtung und drehend um die Achsen senkrecht zu der Drehachse der Einspannvorrichtung sowie zum axialen Einstellen des Trägers gegenüber dem Formwerkzeug vorgesehen sind.

**Revendications**

1. Procédé de fabrication d'un élément de lentille. présentant d'un côté une surface asphérique formée par surmoulage et qui est centrée, c'est-à-dire alignée, par rapport à axialement une surface non asphérique du côté opposé de l'élément, chaque surface étant une surface de révolution, procédé qui est caractérisé par les étapes consistant à préformer un substrat de lentille de verre présentant d'un côté une surface asphérique ayant à peu près le profil et la finition désirés de la surface asphérique exigée sur l'élément de lentille achevé et, du côté opposé, une surface non asphérique, à former sur un outil de moulage une surface de moulage ayant, d'une part, un profil négatif de précision de la surface asphérique exigée sur l'élément de lentille achevé et, d'autre part, la finition optique désirée de cette surface, à monter l'outil de moulage sur un gabarit rotatif et, par rotation de l'outil de moulage au moyen du gabarit pour détecter un défaut d'alignement de l'axe de la surface de moulage et de l'axe de rotation du gabarit et par ajustement de l'outil de moulage sur le gabarit pour corriger un tel, défaut d'alignement, à positionner l'outil de moulage sur le gabarit de façon que l'axe de la surface de moulage soit aligné avec prévision avec l'axe de rotation du gabarit, à fixer l'outil de moulage dans cette position sur le gabarit, à monter le substrat de lentille préformé sur le gabarit de façon que la surface asphérique du substrat soit située en face de la surface de moulage de l'outil de moulage tout en étant séparée de celle-ci par une certaine distance et, par rotation du substrat au moyen du gabarit pour détecter un défaut d'alignement de l'axe de la surface non asphérique du substrat et de l'axe de rotation du gabarit et par ajustement du substrat sur le gabarit pour corriger un tel défaut d'alignement, à positionner le substrat sur le gabarit de façon que l'axe de la surface non asphérique du substrat soit aligné avec précision avec l'axe de rotation du gabarit et que ladite surface non asphérique et la surface de moulage soient séparées par une distance, mesurée suivant les axes alignés de ces surfaces, égale à l'épaisseur axiale désirée de l'élément de lentille achevé, à remplir l'espace entre la surface asphérique du substrat et la surface de moulage d'un matériau polymère transparent liquide, à coller ce matériau à la surface asphérique du substrat en moulant le matériau pour former la surface asphérique désirée et, ensuite, à séparer de la surface de moulage le substrat muni de la couche moulée en matériau polymère collée à celui-ci.

2. Procédé selon la revendication 1, caractérisé en ce que l'ajustement de l'outil de moulage et l'ajustement du substrat de lentille comportent chacun un ajustement par translation dans une direction ou des directions transversales à l'axe de rotation du gabarit et/ou un ajustement par rotation autour d'un axe ou d'axes perpendiculaires à l'axe de rotation du gabarit, et en ce que l'ajustement du substrat comporte également un ajustement dans le sens axial du gabarit par rapport à l'outil de moulage.

3. Procédé selon la revendication 1 ou 2, caractérisé en ce que, avant la séparation du substrat de l'outil de moulage, le bord du substrat est meulé pour donner à l'élément de lentille achevé un bord concentrique par rapport aux axes alignés des surfaces asphérique et non asphérique de l'élément de lentille.

4. Appareil pour la mise en oeuvre du procédé selon la revendication 1, caractérisé par un gabarit rotatif servant à supporter l'outil de moulage et le substrat de lentille préformé, des moyens prévus pour fonctionner lors de la rotation de l'outil de moulage et de la rotation du substrat au moyen du gabarit pour détecter un défaut d'alignement de l'axe de la surface de moulage de l'outil de moulage et de l'axe de rotation du gabarit et un défaut d'alignement de l'axe de la surface non asphérique du substrat et de l'axe de rotation du gabarit, des moyens pour ajuster l'outil de moulage sur le gabarit pour corriger un défaut d'alignement de l'axe de la surface de moulage et de l'axe de rotation du gabarit et pour fixer l'outil de moulage dans une position sur le gabarit dans laquelle ces deux axes sont alignés avec précision l'un avec l'autre, et des moyens pour ajuster le substrat sur le gabarit pour corriger un défaut d'alignement de l'axe de la surface non asphérique du substrat et de l'axe de rotation du gabarit et pour positionner le substrat sur le gabarit de façon que ces deux axes soient alignés avec précision l'un par rapport à l'autre, et pour ajuster le substrat dans le sens axial du gabarit par rapport à l'outil de moulage afin de régler à une valeur désirée la distance entre ladite surface non asphérique et la surface de moulage, mesurée suivant les axes alignés de ces surfaces.

5. Appareil selon la revendication 4, pour la mise en oeuvre du procédé selon la revendication 2, caractérisé en ce que les moyens pour ajuster l'outil de moulage et les moyens pour ajuster le substrat comportent des dispositifs de réglage à filet de vis sur le gabarit, prévus pour ajuster l'outil de moulage et le substrat par translation dans des directions transversales à l'axe de rotation du gabarit et par rotation autour d'axes perpendiculaires à l'axe de rotation du gabarit, et pour ajuster le substrat dans le sens axial du gabarit par rapport à l'outil de moulage.

Fig.1.

Fig.2.

*Fig.3.*

*Fig.4.*